# EUROPÄISCHE PATENTSCHRIFT

(11) **EP 0 680 838 B1**
(45) Veröffentlichungstag und Bekanntmachung des Hinweises auf die Patenterteilung: **11.08.1999**
(21) Anmeldenummer: 95106612.5
(22) Anmeldetag: 03.05.1995
(51) Int. Cl.: B60G 17/056

(54) **Niveauregelventil zum selbsttätigen Konstanthalten der Fahrzeughöhe eines Nutzfahrzeuges mit Luftfederung**
Load levelling valve for keeping constant the height of a commercial vehicle with pneumatic suspension
Soupape de régulation de niveau pour maintenir constante automatiquement la hauteur d'un véhicule utilitaire à suspension pneumatique

(30) Priorität: 07.05.1994 DE 4416280
(43) Veröffentlichungstag der Anmeldung: 08.11.1995
(73) Patentinhaber: Haldex Brake Products GmbH & Co. KG, 69123 Heidelberg (DE)
(72) Erfinder: Sulzyc, Georg, D-69214 Eppelheim (DE)
(74) Vertreter: Rehberg, Elmar, Dipl.-Ing.

(56) Entgegenhaltungen:
- DE-C- 3 446 810
- DE-C- 3 716 436

## Beschreibung

Die Erfindung bezieht sich auf ein Niveauregelventil zum selbsttätigen Konstanthalten der Fahrzeughöhe eines Nutzfahrzeuges mit Luftfederung, mit einem federbelasteten Doppelventilkörper in einem Gehäuse, einem Einlaßsitz und einem einen Auslaßsitz für den Doppelventilkörper tragenden und abgedichtet verschiebbaren hohlen Ventilstößel, dessen Stellung relativ zum Gehäuse des Niveauregelventils über einen die Fahrzeughöhe abtastenden Verstelltrieb veränderbar ist, und mit mindestens einem am Gehäuse vorgesehenen Anschluß für eine zu einem Luftfederbalg führende Leitung sowie einem Anschluß für eine zum Einlaßventil führende Vorratsleitung, wobei zur Realisierung einer Höhenbegrenzung ein mit dem Gehäuse des Niveauregelventils verbindbares Ansatzgehäuse vorgesehen ist, in dem ein Sperrventil untergebracht ist, das über eine Ventilstange betätigbar ist und am Ansatzgehäuse Anschlüsse für eine zu einem Wechselladeventil führende Vorratsleitung vorgesehen sind, in die das Sperrventil eingeschaltet ist. Solche Niveauregelventile verfügen über einen Verstelltrieb, der die Höhe des Fahrzeugaufbaus über der Fahrzeugachse abtastet und eine Korrekturgröße an das Niveauregelventil abgibt, um trotz unterschiedlicher Beladung des Fahrzeugaufbaus eine konstante Fahrzeughöhe einhalten zu können. Der Verstelltrieb ist in der Regel als schwenkbarer Betätigungshebel ausgebildet.

Aus der DE 37 16 436 C2 ist ein Niveauregelventil der eingangs beschriebenen Art, also mit Höhenbegrenzung bekannt. Das kombinierte Einlaß/Auslaß-Ventil ist auch hier in üblicher Weise mit Hilfe eines Doppelventilkörpers realisiert, der im Gehäuse des Niveauregelventils federnd aufgehängt ist. Dieser Doppelventilkörper arbeitet mit einem hohlen Ventilstößel im Sinne des Auslaßventiles zusammen. Der Doppelventilkörper bildet mit einem eingezogenen Rand des Gehäuses des Niveauregelventils oder eines im Gehäuse vorgesehenes Einsatzes das Einlaßventil. Der Verstelltrieb greift über einen Exzenternocken an einem Führungsstück an, welches linear im Gehäuse des Niveauregelventils geführt ist und an dem der hohle Ventilstößel durch einen Querbolzen verankert ist. Am Gehäuse ist mindestens ein Anschluß für eine zu einem Luftfederbalg führende Leitung sowie ein Anschluß für eine zum Einlaßventil führende Vorratsleitung vorgesehen. Zur Realisierung der Höhenbegrenzung ist ein mit dem Gehäuse des Niveauregelventils verbindbares Ansatzgehäuse vorgesehen, in dem ein Sperrventil untergebracht ist, das ebenfalls über die Ventilstange betätigbar ist. Am Ansatzgehäuse sind Anschlüsse für eine zu einem Wechselladeventil führende Vorratsleitung vorgesehen, in die das Sperrventil eingeschaltet ist. Zu der Höhenbegrenzung gehört ein zweites Auslaßventil, das bei Überschreitung eines Grenzhubes des Verstelltriebes zusätzlich zum ersten Auslaßventil in Tätigkeit tritt, so daß damit insgesamt die Durchströmfläche bei einer Entlüftung vergrößert wird, so daß die Entlüftung in kürzerer Zeit stattfinden kann. Auch hierbei ist der Ventilstößel und die Ventilstange jeweils an dem Führungsstück abgestützt. Die Teile sind in fluchtender Anordnung vorgesehen und über Querbolzen mit dem Führungsstück mechanisch verbunden. Damit werden bei jeder Verstellbewegung sowohl der Ventilstößel als auch die Ventilstange mitverstellt. Die Ventilstange ist auf einer Feder abgestützt, so daß die Kraft der Feder permanent den verstelltrieb belastet. Nur bei einem Bruchteil der Verstellbewegungen, die über ein bestimmtes Maß hinausgehen, wird jedoch das Sperrventil überhaupt funktionsmäßig betätigt. Die bei jeder Verstellbewegung zu betätigenden Massen sind durch die Masse der Ventilstange belastet. Damit wird auch die Leichtgängigkeit des Niveauregelventils beeinträchtigt, und es tritt ein entsprechender Verschleiß auf. Zusätzlich ist die Ventilstange koaxial fluchtend zu dem Ventilstößel angeordnet, so daß entsprechende Fertigungstoleranzen bei der Herstellung der Teile des Niveauregelventils eingehalten werden müssen, die die Fertigung verteuern.

Ein weiteres Niveauregelventil, jedoch ohne Höhenbegrenzung, ist aus der DE 40 12 251 C1 bekannt. Das kombinierte Einlaß/Auslaß-Ventil ist auch hier mit Hilfe eines Doppelventilkörpers realisiert, der im Gehäuse des Niveauregelventils federnd aufgehängt ist. Dieser Doppelventilkörper arbeitet mit dem hohlen Ventilstößel im Sinne des Auslaßventiles zusammen. Der Doppelventilkörper bildet mit einem eingezogenen Rand des Gehäuses des Niveauregelventils oder eines im Gehäuse vorgesehenes Einsatzes das Einlaßventil. Der verstelltrieb greift über einen Exzenternocken an einem Führungsstück an, welches linear im Gehäuse des Niveauregelventils geführt ist und an dem der hohle Ventilstößel verankert ist. Die Verankerung ist einstellbar ausgebildet, um die Abschlußstellung des Niveauregelventils einstellen zu können. Das bekannte Niveauregelventil ist zusätzlich mit einem Schnellöseventil ausgestattet. Für die vorliegende Erfindung ist die zusätzliche Anordnung eines Schnellöseventils jedoch ohne Belang. Das Auslaßventil weist in geöffnetem Zustand nur einen relativ kleinen Überströmquerschnitt auf, so daß eine Entlüftung der Luftfederbälge eine entsprechende Zeit benötigt und beispielsweise beim plötzlichen Abheben einer großen Last von dem Fahrzeug Gefahren auftreten können. Auch in Verbindung mit einem Wechselladeventil ist die fehlende Höhenbegrenzung von Nachteil.

Aus der DE 34 46 810 C1 ist ein Niveauregelventil mit Höhenbegrenzung bekannt, wobei ein Sperrventil zur Anwendung kommt, welches in einer Vorratsleitung angeordnet sein kann, die vom Niveauregelventil zu einem Wechselladeventil führt. Wenn das Sperrventil den Durchgang in der Vorratsleitung zum Wechselladeventil sperrt, ist es nicht mehr möglich, den Fahrzeugaufbau über das vorgesehene Maß weiter anzuheben, so daß die Höhenbegrenzung ihre Schutzfunktion erfüllt. Das Sperrventil wird über eine hohle Ventilstange betätigt, die ähnlich wie der hohle Ventilstößel für das kombinierte Einlaß/Auslaß-Ventil am Führungsstück des Verstelltriebes lose abgestützt ist.

Der Erfindung liegt die Aufgabe zugrunde, ein Niveauregelventil der eingangs beschriebenen Art, also mit Höhenbegrenzung durch ein Sperrventil so weiterzubilden, daß die Betätigung des Sperrventils über die Ventilstange bei Betätigung des Niveauregelventils im normalen Rahmen unterbleibt. Weiterhin sollen Niveauregelventile ohne Höhenbegrenzung mit geringen Umrüstarbeiten zu Niveauregelventilen mit Höhenbegrenzung umrüstbar sein.

Erfindungsgemäß wird dies dadurch erreicht, daß die Ventilstange über eine Feder in eine unbetätigte Ruhelage abgestützt ist, in der ihr dem Ventilstößel des Einlaß/Auslaß-Ventils zugekehrtes Ende mit einem Freigang zum Ventilstößel oder einem Führungsstück des Verstelltriebes endet.

Die Erfindung geht von der Erkenntnis aus, die mechanische Kupplung der Teile durch einen Querbolzen zu verlassen und bewußt einen Freigang vorzusehen, also einen Abstand zwischen dem oberen Ende der Ventilstange und dem unteren Ende des Führungsstücks des Verstelltriebes oder des hohlen Ventilstößels zugelassen, womit erreicht wird, daß die zu bewegenden Massen bei einer normalen Betätigung des Niveauregelventiles verringert sind. Es wird hier nur der Ventilstößel betätigt, nicht jedoch die Ventilstange. Erst wenn die Verstellbewegung ein gewisses Maß überschreitet, tritt auch eine Bewegung an der Ventilstange auf, wodurch das Sperrventil in Funktion gesetzt wird. Damit wird auch die Leichtgängigkeit des Niveauregelventils mit Höhenbegrenzung gefördert und andererseits eine Loslösung von der exakt fluchtenden Bauweise möglich. Für die Funktion des Sperrventils ist es bedeutungslos, ob eine exakt fluchtende Anordnung eingehalten wird oder nicht; wesentlich ist nur, daß letztlich die Ventilstange von dem Führungsstück oder von dem Ventilstößel erfaßt und betätigt werden kann. Ein Versatz in der Axialität ist dabei nicht hinderlich. Die Höhenbegrenzung kann innerhalb eines Ansatzgehäuses verwirklicht werden, welches z.B. in sehr einfacher Weise auf die Entlüftungsöffnung eines Niveauregelventils ohne Höhenbegrenzung aufsetzbar ist. Dabei kann das Ansatzgehäuse mit seinen Innenteilen vorteilhaft hergestellt, montiert und vorrätig gehalten werden, um es bei Bedarf mit einem Niveauregelventil zu kombinieren, wenn zusätzlich die Höhenbegrenzung gewünscht wird.

Im Ansatzgehäuse kann eine abgedichtete Trennwand vorgesehen sein, durch die die Ventilstange dichtend hindurchgeführt ist. Die Ventilstange selbst kann zu Entlüftungszwecken hohl ausgebildet sein. Es ist aber auch möglich, das erste Auslaßventil über eine gesonderte Entlüftungsöffnung am Gehäuse des Niveauregelventils zu entlüften und die Ventilstange hohl oder nichthohl auszubilden. Die abgedichtete Trennwand dient dazu, die Vorratsleitung als Versorgungsleitung über das Ansatzgehäuse zu führen und die dadurch entstehende Kammer gegenüber der Atmosphäre abzudichten. Die abgedichtete Trennwand kann gleichzeitig mit dem Aufsetzen des Ansatzgehäuses an das Gehäuse des Niveauregelventils festgelegt werden.

Der Ventilkörper des Sperrventils kann als Doppelventilkörper ausgebildet sein und zusätzlich einem zweiten Auslaßsitz zugeordnet sein, so daß auf diese Weise zusätzlich zu der Höhenbegrenzung auch ein zweites Auslaßventil ohne großen Aufwand gebildet sein kann, welches im Bedarfsfalle die vom ersten Auslaßventil bereitgestellte Auslaßfläche vergrößert und damit zu einer schnellen Entlüftung beiträgt.

Im Ansatzgehäuse kann ein über ein Gewinde axial verstellbarer Einsatz vorgesehen sein, der den Durchlaßsitz des Sperrventils oder den Auslaßsitz des zweiten Auslaßventils trägt. Durch den verstellbaren Einsatz ist der Hub für den Eintritt der Wirkung des Sperrventils einstellbar, also der Grenzhub wählbar, bei dessen Überschreiten das Sperrventil seine Sperrfunktion erfüllt.

Die Ventilstange kann zu Zwecken der Entlüftung des Niveauregelventils hohl ausgebildet sein, wobei sowohl die Entlüftung des ersten Auslaßventils wie auch die des zweiten Auslaßventils über die hohle Ventilstange geführt sind.

Die Ventilstange kann einen Anschlag tragen, der mit einem Gegenanschlag an der Trennwand oder am Ansatzgehäuse zusammenarbeitet, wobei der verstellbare Einsatz den Durchlaßsitz des Sperrventils trägt. Der Grenzhub zur Betätigung des Sperrventils setzt sich damit aus dem Freigang und dem Hub des Öffnungsquerschnittes des Sperrventils zusammen. Bei Verstellung des Einsatzes wird insoweit der Öffnungshub des Sperrventiles verstellt und damit auf den Gesamthub Einfluß genommen, so daß letztlich der Grenzhub einstellbar ist.

Eine andere Möglichkeit besteht darin, daß die Ventilstange einen Anschlagt trägt, der mit einem Gegenanschlag an dem verstellbaren Einsatz zusammenarbeitet, wobei die Ventilstange den Durchlaßsitz des Sperrventils trägt. Damit ist das Sperrventil etwas anders ausgebildet und angeordnet. Auch bei dieser Möglichkeit ist die Einstellung des Grenzhubes vornehmbar, wobei jedoch die Durchtrittsfläche des Sperrventiles konstant bleibt und der Freigang unmittelbar verändert, d. h. eingestellt werden kann.

Im Ansatzgehäuse kann bei dieser Ausführungsform eine eigene Entlüftungsöffnung für das zweite Auslaßventil vorgesehen sein, wodurch auch die Notwendigkeit entfällt, die Ventilstange hohl ausbilden zu müssen.

Das Ansatzgehäuse ist in einfacher Weise an den Entlüftungsstutzen des Gehäuses des Niveauregelventils ansetzbar, wobei eine dort vorgesehene Abdeckkappe nun ihrerseits wiederum auf die Entlüftungsöffnung des Ansatzgehäuses aufsetzbar ist. Das Ansatzgehäuse und das Gehäuse des Niveauregelventils können vorteilhaft aus Kunststoff bestehen, also als Kunststoffspritzteile ausgebildet sein, wobei zur Verbindung der beiden Gehäuse eine Schnappverbindung für eine erleichterte Montage ausreicht. Ein druckdichter Anschluß der beiden Gehäuse aneinander ist nicht erforderlich.

Die Erfindung wird anhand zweier bevorzugter Ausführungsbeispiele weiter erläutert und beschrieben. Es zeigen:
- Figur 1: einen Schnitt durch das Niveauregelventil in einer ersten Ausführungsform und
- Figur 2: einen Schnitt durch das Niveauregelventil in einer zweiten Ausführungsform.

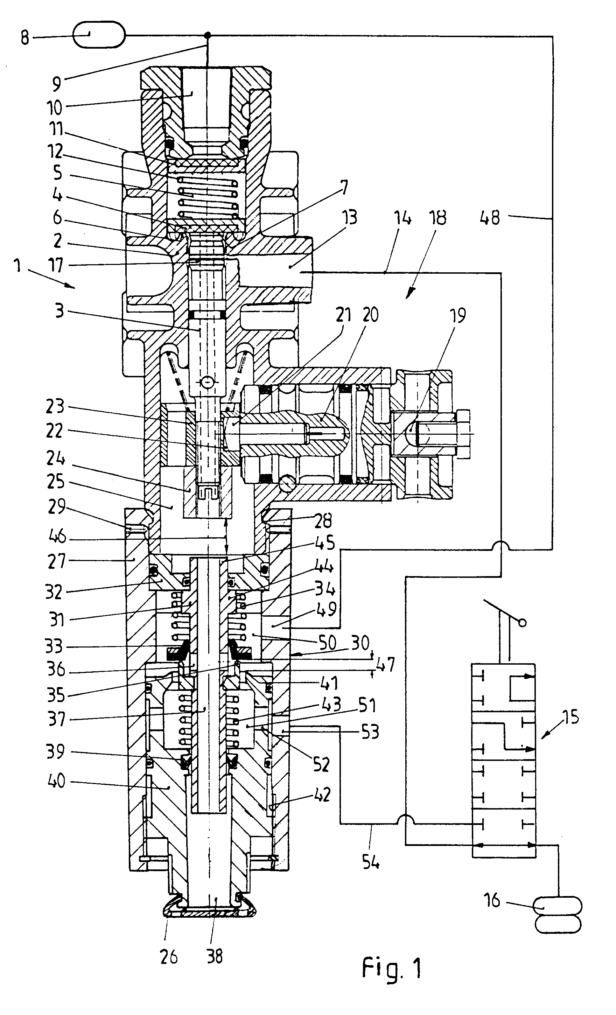

Das bekannte Niveauregelventil 1 ohne Höhenbegrenzung ist im oberen Teil der Figur 1 dargestellt. Es weist ein Gehäuse 2 auf, in welchem ein zu Entlüftungszwecken hohl ausgebildeter Ventilstößel 3 dichtend und gleitend geführt ist. Ein Doppelventilkörper 4 ist im Anschluß an eine Vorratskammer 5 im Gehäuse 2 federnd aufgehängt. Der Doppelventilkörper 4 bildet mit einem eingezogenen Rand 6 des Gehäuses 2 ein Einlaßventil 4, 6 und mit dem oberen Rand 7 des hohlen Ventilstößels 3 ein erstes Auslaßventil 4, 7. Druckluft aus einem Vorratsbehälter 8 ist über eine Leitung 9 zu einem Anschluß 10 am Gehäuse 2 des Niveauregelventils 1 herangeführt und steht über ein Rückschlagventil 11 in der Vorratskammer 5 an. Der Doppelventilkörper 4 und das Rückschlagventil 11 können auf einer gemeinsamen Feder 12 abgestützt sein. An einem Anschluß 13 ist eine Leitung 14 angeschlossen, die über ein Wechselladeventil 15 zu einem Luftfederbalg 16 führt. Der Anschluß 13 hat über eine Verdickung 17 am Ventilstößel 3 Anschluß zu dem Einlaßventil 4, 6 bzw. dem Auslaßventil 4, 7. Es ist hier nur ein Anschluß 13 und eine Leitung 14 zu einem Luftfederbalg 16 dargestellt. Es versteht sich, daß hier auch mehrere Leitungen angeschlossen und vorgesehen sein können.

Ein Verstelltrieb 18 für die Bewegung des Ventilstößels 3 und damit die Betätigung des Einlaßventiles 4, 6 bzw. des Auslaßventiles 4, 7 weist eine Stellstange 19 auf, die an einer Welle 20 angreift, die einen Exzenternocken 21 trägt. Der Exzenternocken 21 gleitet in einer Führungsnut 22 eines Führungsstückes 23, welches koaxial zu dem Ventilstößel 3 in dem Gehäuse 2 translatorisch bewegbar ist. Der Ventilstößel 3 ist im Führungsstück 23 mit Hilfe eines Gewindes verstellbar und wird nach ordnungsgemäßer Einstellung der Abschlußstellung des Einlaßventils 4, 6 und des Auslaßventils 4, 7 mit einer Mutter 24 gekontert. Die Festlegung des Ventilstößels 3 im Führungsstück 23 kann auch in anderer Weise erfolgen.

Die Funktion dieses Niveauregelventils 1 und seine normale Betätigung des Einlaßventils 4, 6 bzw. des Auslaßventils 4, 7 sind bekannt.

An eine Entlüftungsöffnung 25 des Gehäuses 2 des Niveauregelventils 1, die normalerweise mit einer Entlüftungskappe 26 abgedeckt ist, ist ein Ansatzgehäuse 27 angesetzt, welches über eine Schnappverbindung 28 mit dem Gehäuse 2 des Niveauregelventils leicht einrastend verbindbar ist. Die Lage kann zusätzlich durch Stiftschrauben 29 gesichert werden. In dem Ansatzgehäuse 27 ist eine Höhenbegrenzung 30 untergebracht, welche über eine Ventilstange 31 betätigbar ist. Die Ventilstange 31 ist durch eine abgedichtete Trennwand 32 dichtend hindurchgeführt. Die Trennwand 32 ist in dem Ansatzgehäuse 27 durch die Schnappverbindung mit dem Gehäuse 2 in ihrer relativen Lage ortsfest festgelegt. Auf der Ventilstange 31 ist ein Doppelventilkörper 33 dichtend verschiebbar, der auf einer Schließfeder 34 abgestützt ist. Die Ventilstange 31 tragt einen Auslaßsitz 35, der mit dem Doppelventilkörper 33 ein zweites Auslaßventil 33, 35 - neben dem ersten Auslaßventil 4, 7 - bildet. Die Ventilstange 31 ist hohl ausgebildet und besitzt in relativer Zuordnung zu dem zweiten Auslaßventil 33, 35 eine oder mehrere Bohrungen 36, die zu dem die Ventilstange 31 axial durchsetzenden Kanal 37 führen. Der Kanal 37 hat Anschluß zu einer Entlüftungsöffnung 38, die mit der Entlüftungskappe 26 abgedeckt ist. Die hohle Ventilstange 31 ist nicht nur in der Trennwand 32 dichtend geführt, sondern zusätzlich noch im Bereich einer Dichtung 39.

Im Ansatzgehäuse 27 ist ein Einsatz 40 dichtend untergebracht, der einen Durchlaßsitz 41 trägt, der mit dem hohlen Doppelventilkörper 33 das Sperrventil 33, 41 bildet, welches die Höhenbegrenzung 30 darstellt. Der Einsatz 40 ist in einem Gewinde 42 im Ansatzgehäuse 27 durch Verdrehen axial verstellbar, wodurch die relative Lage des Durchlaßsitzes 41 zum Doppelventilkörper 33 einstellbar ist. Die Ventilstange 31 ist am Einsatz 40 über eine Feder 43 abgestützt. Die Ventilstange 31 ist mit einem Anschlag 44 versehen, dem ein an der Trennwand 32 gebildeter Gegenanschlag zugeordnet ist. Die Kraft der Schließfeder 34 ist relativ schwach bemessen. Die Feder 43 hält die Ventilstange 31 in ihrer oberen Stellung, d. h. mit ihrem Anschlag 44 in Anlage an der Trennwand 32. Wenn der Anschlag 44 fehlt, muß die Kraft der Federn 34 und 43 entsprechend aufeinander eingestellt sein. Es ist hier eine Ruhelage der Teile zueinander dargestellt, bei der das obere Ende 45 zu dem unteren Ende der Mutter 24 oder des Führungsstückes 23 oder des Ventilstößels 3 einen Freigang 46 aufweist, also einen Abstand, in welchem sich normale Bewegungen des Verstelltriebes 18 abspielen, bei denen nur das Einlaßventil 4, 6 und das Auslaßventil 4, 7 betätigt werden. Der Doppelventilkörper 33 ist um einen Hub 47 von dem Durchlaßsitz 41 entfernt. Es ist erkennbar, daß das Sperrventil 33, 41 erst dann schließt, wenn der Verstelltrieb eine Bewegung durchgeführt hat, bei der sowohl der Freigang 46 als auch der Hub 47 aufgebraucht sind. Erst dann kommt das Sperrventil 33, 41 in seine Schließstellung. Durch Verdrehen des Einsatzes 40 im Ansatzgehäuse 27 kann der Hub 47 verändert werden, während der Freigang 46 dabei konstant bleibt. Insgesamt ist damit aber der Grenzhub einstellbar und festlegbar, bei dessen Überschreiten das Sperrventil 33, 41 schließt. Von dem Vorratsbehälter 8 führt eine Vorratsleitung 48 zu einem Anschluß 49 am Ansatzgehäuse 27 und von dort in eine Vorratskammer 50, die nur bei geschlossenem Sperrventil 33, 41 abgeschlossen wird. Ansonsten besteht Verbindung zu einer Anschlußkammer 51 und durch eine Durchbrechung 52 im Einsatz 40 zu einem Anschluß 53, von dem sich in einer Leitung 54 die Versorgungsleitung des Wechselladeventils 15 mit Vorratsluft fortsetzt. In der dargestellten Stellung "Fahrt" ist die Leitung 54 am Wechselladeventil 15 abgeschlossen, und der Luftfederbalg 16 wird über die Leitung 14 ausgesteuert. Lediglich in der Stellung "Heben" des Wechselladeventils 15 gelangt Vorratsluft über die Vorratsleitung 48 und die Leitung 54 in den Luftfederbalg 16, und zwar so lange, bis die Höhenbegrenzung durch Schließen des Sperrventils 33, 41 einsetzt.

Der besondere Vorteil der Höhenbegrenzung 30 in dem Ansatzgehäuse 27 ist darin zu sehen, daß ein normal ausgebildetes Niveauregelventil 1, wie es im oberen Bereich der Figur 1 dargestellt ist, durch Abnehmen der Entlüftungskappe 26 und Ansetzen des Ansatzgehäuses 27 sehr einfach und schnell in ein Niveauregelventil mit Höhenbegrenzung 30 umrüstbar ist, wobei die entsprechenden Leitungsverbindungen zum Vorratsbehälter 8 und zum Wechselladeventil 15 angebracht werden müssen.

Bei einem Überschreiten der Höhenbegrenzung 30, beispielsweise bei einem plötzlichen Abnehmen einer relativ großen Last von dem Fahrgestell, werden die Luftfederbälge 16 das Fahrgestell anheben, wobei dabei die Höhenbegrenzung 30 durch Schließen des Sperrventils 33, 41 überschritten werden kann. In der Folge öffnet das zweite Auslaßventil 33, 35. Die Vorratsleitung 48 ist abgeschlossen, und es findet eine gezielte Entlüftung der Luftfederbälge 16 über das geöffnete zweite Auslaßventil 33, 35 statt.

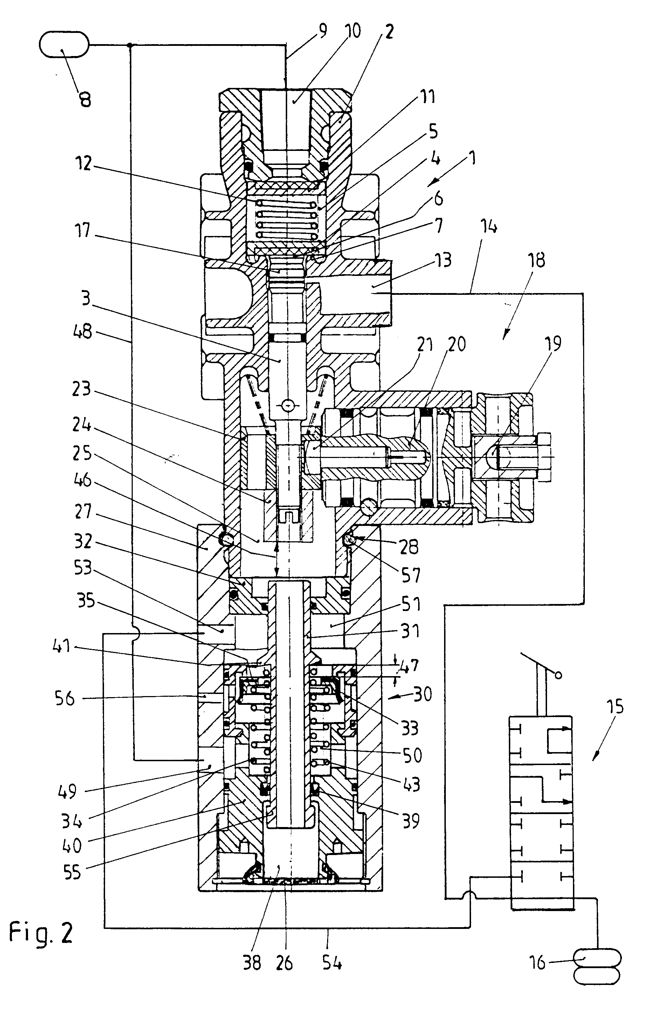

Die in Figur 2 dargestellte Ausführungsform des Niveauregelventils ist ähnlich aufgebaut wie die Ausführungsform gemäß Figur 1, weshalb diesbezüglich auf eine erneute Beschreibung verzichtet werden kann. Abweichend von der Ausführungsform der Figur 1 ist die Höhenbegrenzung 30, das Sperrventil 33, 41 etwas anders gestaltet und angeordnet. Der Durchlaßsitz 41 ist hier Bestandteil der hohlen Ventilstange 31, während der Auslaßsitz 35 an dem Einsatz 40 angeordnet ist. Ein an der Ventilstange 31 angeordneter Anschlag 55 arbeitet hier mit dem Einsatz 40 zusammen. Die Ventilstange 31 ist nur zur Entlüftung des ersten Auslaßventiles 4, 7 hohl ausgebildet. Falls das Gehäuse 2 eine eigene Entlüftungsöffnung aufweisen kann, kann die Ventilstange 31 auch ohne den Kanal 37, also geschlossen ausgebildet werden. Stattdessen ist im Ansatzgehäuse 27 eine eigene Entlüftungsöffnung 56 für das zweite Auslaßventil 33, 35 vorgesehen. Zur Sicherung des Ansatzgehäuses 27 am Gehäuse 2 des Niveauregelventils 1 über die Schnappverbindung 28 hinaus können Querbolzen 57 vorgesehen sein.

Die Ausführungsform des Niveauregelventils 1 gemäß Figur 2 hat den Vorteil, daß bei einer Verstellung des Einsatzes 40 im Ansatzgehäuse 27 der Hub 47 konstant bleibt und nur der Freigang 46 verstellt wird. Die Durchströmfläche des Sperrventils 33, 41 in geöffnetem Zustand bleibt damit konstant.

### BEZUGSZEICHENLISTE

- 1 -: Niveauregelventil
- 2 -: Gehäuse
- 3 -: Ventilstößel
- 4 -: Doppelventilkörper
- 5 -: Vorratskammer
- 6 -: Rand
- 7 -: Rand
- 8 -: Vorratsbehälter
- 9 -: Leitung
- 10 -: Anschluß
- 11 -: Rückschlagventil
- 12 -: Feder
- 13 -: Anschluß
- 14 -: Leitung
- 15 -: Wechselladeventil
- 16 -: Luftfederbalg
- 17 -: Verdickung
- 18 -: Verstelltrieb
- 19 -: Stellstange
- 20 -: Welle
- 21 -: Exzenternocken
- 22 -: Führungsnut
- 23 -: Führungsstück
- 24 -: Mutter
- 25 -: Entlüftungsöffnung
- 26 -: Entlüftungskappe
- 27 -: Ansatzgehäuse
- 28 -: Schnappverbindung
- 29 -: Stiftschraube
- 30 -: Höhenbegrenzung
- 31 -: Ventilstange
- 32 -: Trennwand
- 33 -: Doppelventilkörper
- 34 -: Schließfeder
- 35 -: Auslaßsitz
- 36 -: Bohrung
- 37 -: Kanal
- 38 -: Entlüftungsöffnung
- 39 -: Dichtung
- 40 -: Einsatz
- 41 -: Durchlaßsitz
- 42 -: Gewinde
- 43 -: Feder
- 44 -: Anschlag
- 45 -: Ende
- 46 -: Freigang
- 47 -: Hub
- 48 -: Vorratsleitung
- 49 -: Anschluß
- 50 -: Vorratskammer
- 51 -: Anschlußkammer
- 52 -: Durchbrechung
- 53 -: Anschluß
- 54 -: Leitung
- 55 -: Anschlag
- 56 -: Entlüftungsöffnung
- 57 -: Querbolzen

## Patentansprüche

1. Niveauregelventil zum selbsttätigen Konstanthalten der Fahrzeughöhe eines Nutzfahrzeuges mit Luftfederung, mit einem federbelasteten Doppelventilkörper (4) in einem Gehäuse (2), einem Einlaßsitz (6) und einem einen Auslaßsitz (7) für den Doppelventilkörper (4) tragenden und abgedichtet verschiebbaren hohlen Ventilstößel (3), dessen Stellung relativ zum Gehäuse (2) des Niveauregelventils (1) über einen die Fahrzeughöhe abtastenden Verstelltrieb (18) veränderbar ist, und mit mindestens einem am Gehäuse (2) vorgesehenen Anschluß (13) für eine zu einem Luftfederbalg (16) führende Leitung (14) sowie einem Anschluß (10) für eine zum Einlaßventil (4, 6) führende Vorratsleitung (9), wobei zur Realisierung einer Höhenbegrenzung (30) ein mit dem Gehäuse (2) des Niveauregelventils (1) verbindbares Ansatzgehäuse (27) vorgesehen ist, in dem ein Sperrventil (33, 41) untergebracht ist, das über eine Ventilstange (31) betätigbar ist und am Ansatzgehäuse (27) Anschlüsse (49, 51) für eine zu einem Wechselladeventil (15) führende Vorratsleitung (48, 54) vorgesehen sind, in die das Sperrventil (33, 41) eingeschaltet ist, **dadurch gekennzeichnet**, daß die Ventilstange (31) über eine Feder (43) in eine unbetätigte Ruhelage abgestützt ist, in der ihr dem Ventilstößel (3) des Einlaß/Auslaß-Ventils (4, 6; 4, 7) zugekehrtes Ende mit einem Freigang (46) zum Ventilstößel (3) oder zu einem Führungsstück (23) des Verstelltriebes (18) endet.

2. Niveauregelventil nach Anspruch 1, dadurch gekennzeichnet, daß im Ansatzgehäuse (27) eine abgedichtete Trennwand (32) vorgesehen ist, durch die die Ventilstange (31) dichtend hindurchgeführt ist.

3. Niveauregelventil nach Anspruch 1 oder 2, **dadurch gekennzeichnet**, daß der Ventilkörper des Sperrventils (33, 41) als Doppelventilkörper (33) ausgebildet ist und zusätzlich einem zweiten Auslaßsitz (35) zugeordnet ist.

4. Niveauregelventil nach einem der Ansprüche 1 bis 3, dadurch gekennzeichnet, daß im Ansatzgehäuse (27) ein über ein Gewinde axial verstellbarer Einsatz (40) vorgesehen ist, der den Durchlaßsitz (41) des Sperrventils (33, 41) oder den Auslaßsitz (35) des zweiten Auslaßventils (33, 35) trägt.

5. Niveauregelventil nach einem der Ansprüche 1 bis 4, dadurch gekennzeichnet, daß die Ventilstange (31) zum Zwecke der Entlüftung des Niveauregelventils (1) hohl ausgebildet ist.

6. Niveauregelventil nach Anspruch 5, dadurch gekennzeichnet, daß die Ventilstange (31) einen Anschlag (44) trägt, der mit einem Gegenanschlag an der Trennwand (32) oder am Ansatzgehäuse (27) zusammenarbeitet, wobei der verstellbare Einsatz (40) den Durchlaßsitz (41) des Sperrventils (33, 41) trägt.

7. Niveauregelventil nach Anspruch 5, dadurch gekennzeichnet, daß die Ventilstange (31) einen Anschlag (55) trägt, der mit einem Gegenanschlag an dem verstellbaren Einsatz (40) zusammenarbeitet, wobei die Ventilstange (31) den Durchlaßsitz (41) des Sperrventils (33, 41) trägt.

8. Niveauregelventil nach Anspruch 7, dadurch gekennzeichnet, daß im Ansatzgehäuse (27) eine eigene Entlüftungsöffnung (56) für das zweite Auslaßventil (33, 35) vorgesehen ist.

9. Niveauregelventil nach einem der Ansprüche 1 bis 8, dadurch gekennzeichnet, daß das Ansatzgehäuse (27) an den Entlüftungsstutzen der Entlüftungsöffnung (25) des Gehläuses (2) des Niveauregelventils (1) ansetzbar ist.

10. Niveauregelventil nach Anspruch 9, dadurch gekennzeichnet, daß das Ansatzgehäuse (27) und das Gehäuse (2) des Niveauregelventils (1) aus Kunststoff bestehen, und daß zur Verbindung der beiden Gehäuse (2, 27) eine Schnappverbindung (28) vorgesehen ist.

## Claims

1. Load levelling valve for keeping constant the height of a commercial vehicle with pneumatic suspension, comprising a spring biased double valve body (4) in a housing (2), an inlet seat (6), a hollow valve tappet (3) having an outlet seat (7) allocated to the double valve body (4) and being sealingly guided, the position of the tappet with respect to the housing (2) of the levelling valve (1) is actuated by an actuation drive (18) sensing the height of the chassis of the vehicle, at least one connection (13) on the housing (2) for a conduit (14) to a bellow (16), and a connection (10) for a conduit (9) to the inlet valve (4, 6), in which for the purposes of a limited height control (30) a fitting housing (27) is provided, the housing (27) to be connected with the housing (2) of the levelling valve (1) and having connections (49, 51) for an air line (48, 54) to an actuation valve (15) comprises a separation valve (33, 41) actuable by a valve rod (31), the separation valve (33, 41) being positioned in the air line (48, 54), characterized in that the valve rod (31) is biased by a spring (43) into a not actuated position, in which the end of the valve rod facing the valve tappet (3) of the inlet/outlet valve (4, 6;4, 7) is located with a distance (46) to the valve tappet (3) or to a guiding member (23) of the actuation drive (18).

2. The levelling valve of claim 1, characterized in that a wall (32) is sealingly provided in the fitting housing (27), through which the valve rod (31) sealingly extends.

3. The levelling valve of claim 1 or 2, characterized in that the valve body of the separation valve (33, 41) is designed as a double valve body (33) and in addition is allocated to a second outlet seat (35).

4. The levelling valve of one of the claims 1 to 3, characterized in that an insert (40) is provided in the fitting housing (27), the insert being adjustable in axial direction by a thread and carrying the seat (41) of the separation valve (33, 41) or the outlet seat (35) of the second outlet valve (33, 35).

5. The levelling valve of one of the claims 1 to 4, characterized in that the valve rod (31) is designed hollow for the purposes of venting the levelling valve (1).

6. The levelling valve of claim 5, characterized in that the valve rod (31) has a stop (44) cooperating with a counterstop on the wall (32) or on the fitting housing (27), the adjustable insert (40) carrying the seat (41) of the separation valve (33, 41).

7. The levelling valve of claim 5, characterized in that the valve rod (31) has a stop (55) cooperating with a counterstop on the adjustable insert (40), the valve rod (31) carrying the seat (41) of the separation valve (33, 41).

8. The levelling valve of claim 7, characterized in that the fitting housing (27) is provided with an own vent orifice (56) for the second outlet valve (33, 35).

9. The levelling valve of one of the claims 1 to 8, characterized in that the fitting housing (27) is adapted to fit to the vent muff of the vent orifice (25) of the housing (2) of the levelling valve (1).

10. The levelling valve of claim 9, characterized in that the fitting housing (27) and the housing (2) of the levelling valve (1) are made from plastics and in that a snap connection (28) is provided to connect the two housings (2, 27).

## Revendications

1. Soupape de régulation de niveau destinée à maintenir automatiquement constante la hauteur d'un véhicule utilitaire à suspension pneumatique, soupape comprenant un corps à double soupape (4) placé dans un boîtier (2), sous contrainte d'un ressort, ainsi qu'un siège d'admission (6) et un poussoir creux (3) monté hermétiquement à glissement, poussoir qui porte un siège d'échappement (7) pour le corps à double soupape, la position du poussoir pouvant, par rapport au boîtier (2) de la soupape de régulation de niveau, être modifiée via un organe de commande (18) qui explore la hauteur du véhicule, au boitier (2) étant prévu au moins un raccord (13) pour une conduite (14) menant à un élément de suspension pneumatique (16), ainsi qu'un raccord (10) pour une conduite d'admission (9), menant à la soupape d'admission (4, 6) sur la soupape de régulation de niveau étant prévu, aux fins de réaliser un limiteur de hauteur (30), un boitier complémentaire (27) qui peut être relié au boîtier de la soupape de régulation de niveau (1), dans ce boîtier complémentaire (27) étant logé une soupape d'arrêt (33, 41) qui peut être actionnée via une tige de soupape (31) et sur ce boitier complémentaire étant prévus des raccords (49, 51) pour une conduite d'admission (48, 54) menant à une valve de charge alternée (15), conduite dans laquelle la soupape d'arrêt (33, 41) est intercalée, la soupape de régulation de niveau **étant caractérisée** en ce que la tige de soupape (31) est maintenue non-actionnée au moyen d'un ressort (43) dans une position de repos dans laquelle l'extrémité de la tige de soupape orientée vers le poussoir (3) de la soupape d'admission et d'échappement (4, 6; 4, 7) est séparée d'une distance libre (46) du poussoir (3) ou d'une pièce de guidage (23) de l'organe de commande (18).

2. Soupape de régulation de niveau suivant la revendication 1, **caractérisée** en ce que, dans le boîtier complémentaire (27), il est prévu une cloison étanche (32), au travers de laquelle est guidée, avec maintien de l'étanchéité, une tige de soupape (31).

3. Soupape de régulation de niveau suivant la revendication 1 ou la revendication 2, **caractérisée** en ce que le corps de soupape de la soupape d'arrêt (33, 41) a la forme d'un corps à double soupape (33) et est en outre associé à un deuxième siège d'échappement (35).

4. Soupape de régulation de niveau suivant l'une quelconque des revendications 1 à 3, **caractérisée** en ce que, dans le boîtier complémentaire (27), il est prévu un embout (40) dont la position sur l'axe longitudinal peut être modifiée au moyen d'un filetage, cet embout portant le siège de passage (41) de la soupape d'arrêt (33, 41) ou le siège d'échappement (35) de la deuxième soupape d'échappement (33, 35).

5. Soupape de régulation de niveau suivant l'une quelconque des revendications 1 à 4, **caractérisée** en ce que la tige de soupape (31) a, aux fins de l'évacuation de l'air de la soupape de régulation de niveau, la forme d'une tige creuse.

6. Soupape de régulation de niveau suivant la revendication 5, **caractérisée** en ce que la tige de soupape (31) porte une butée (44) qui coopère avec une contre-butée située sur la cloison de séparation (32) ou sur le boîtier complémentaire (27), l'embout réglable (40) portant le siège de passage (41) de la soupape d'arrêt (33, 41).

7. Soupape de régulation de niveau suivant la revendication 5, **caractérisée** en ce que la tige de soupape (31) porte une butée (55), qui coopère avec une contre-butée située sur l'embout réglable (40), la tige de soupape (31) portant le siège de passage (41) de la soupape d'arrêt (33, 41).

8. Soupape de régulation de niveau suivant la revendication 7, **caractérisée** en ce que dans le boîtier complémentaire (27), il est prévu un orifice (56) destiné à l'évacuation de l'air de la deuxième soupape d'échappement (33, 35).

9. Soupape de régulation de niveau suivant l'une quelconque des revendications 1 à 8, **caractérisée** en ce que le boîtier complémentaire (27) peut être monté sur l'embout d'évacuation d'air de l'orifice d'évacuation d'air (25) de l'orifice du boîtier (2) de la soupape de régulation de niveau (1).

10. Soupape de régulation de niveau suivant la revendication 9, **caractérisée** en ce que le boîtier complémentaire (27) et le boîtier (2) de la soupape de régulation de niveau (1) sont fabriqués en matière plastique, et, qu'aux fins de relier les deux boîtiers (2, 27), il est prévu une liaison par encliquetage (28).
